# EUROPEAN PATENT APPLICATION

(11) **EP 3 527 949 A1**
(43) Date of publication of application: **21.08.2019**
(21) Application number: 18157342.9
(22) Date of filing: 19.02.2018
(51) Int. Cl.: G01D 5/244, G01D 5/38, G02B 26/08, G01D 5/347, B41J 19/20

(54) **POSITION MEASUREMENT DEVICE**

(71) Applicant: OCE Holding B.V., 5914 CA Venlo (NL)
(72) Inventor: LANE, John A., 5914 CA Venlo (NL)
(74) Representative: OCE IP Department

(57) **Abstract**

The invention provides a position measurement device comprising a sensor and a scale, the scale comprising discrete markers that are sensed by the sensor for generating a signal indicating a position along the scale. The device is characterized in that it further comprises an actuator for periodically moving the scale and sensor relative to each other with an amplitude exceeding a distance between two markers and a computing unit for determining a position from the signal of the sensor during at least one period.

## Description

### BACKGROUND OF THE INVENTION

### 1. Field of the invention

The invention relates to a position measurement device comprising a sensor and a scale, the scale comprising discrete markers that are sensed by the sensor for generating a signal indicating a position along the scale. The invention further relates to a method for determining a position along said scale and an inkjet printer that comprises an inkjet print head, that is positioned using the position measurement device.

### 2. Description of the Related Art

A known inkjet printer comprises a carriage with inkjet print heads that traverses a medium on a flatbed support in two directions for applying ink in order to manifest an image. The position of the carriage along one direction is determined by a position measurement device using a scale with discrete markers that are sensed by a sensor connected to the carriage. This enables a motor and control unit to place the carriage at a predefined location along the scale. Both the position and the velocity of the carriage are monitored by reading a signal from the sensor. The direction of the velocity is often determined using two sensors spaced apart in such a way that a phase difference between their signals can be used for this purpose.

The accuracy of this known device for determining a position is limited by the distance between the markers on the scale. Between the markers no indication of a position is possible and the location can only be estimated from previous readings. Hence, for increasing a resolution of inkjet printers and a higher accuracy of position readings, it is necessary to increase the density of markers on the scale and to use smaller sensors for reading the markers. However, this leads to higher costs.

It is therefore an object of the invention to increase the accuracy of a position reading on a scale with markers without changing the scale.

### SUMMARY OF THE INVENTION

In order to achieve this object, the device according to the invention comprises an actuator for periodically moving the scale and sensor relative to each other with an amplitude exceeding a distance between two markers and a computing unit for determining a position from a signal of the sensor during at least one period.

The periodic movement of the sensor relative to the scale results in a periodic signal of the reading of the markers. This periodic signal is sampled and processed according to existing mathematical methods to obtain a time-averaged value of the position, which is more accurate than the individual readings of the markers, thereby achieving the object of the invention.

In a further embodiment, the actuator is a voice coil for moving a body comprising the sensor. The voice coil is a coil of wire attached to the apex of a cone and provides a motive force to the cone by the reaction of a magnetic field to the current passing through it. A periodic movement results from a periodic current through the wire of the coil.

In a further embodiment, the voice coil moves two bodies of equal weight, at least one body comprising a sensor. The relative motion of the two equally weighted bodies relative to each other creates a dynamically balanced system, resulting in less undesirable mechanical vibrations. If both bodies comprise a sensor, a higher quality signal may be obtained by combining the signals of the two sensors. Furthermore, a redundant sensor is available for a situation that one of the sensors is not functioning correctly.

In an embodiment, the sensor comprises a light emitting element and a light sensitive element. These elements provide an optical reading of the scale and have a small weight, which is advantageous for attaining high oscillation frequencies and thus measurement bandwidth. Furthermore, the optical path between the two elements may be modulated instead of moving the complete sensor. This may be done by moving an optical mask or by creating a standing pressure wave in a clear sealed chamber with an opto-acoustically sensitive fluid or gas for bending light and thus creating disturbance in the optical path. In this case the actuator is preferably a piezo-electric element that typically operates at a higher frequency than a voice coil and can generally be used to create displacements in a high-bandwidth, high-accuracy positioning system, despite its limited motion range.

Further details of the invention are given in the dependent claims. The present invention is also embodied in a method for determining a position along a scale and in an inkjet printer comprising said position measurement device.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Figure 1 shows a print system wherein the invention is applied;
Figure 2 is a schematic drawing of a device according to the invention;
Figure 3 is a signal as obtained from the invented sensor; and
Figure 4 is a schematic drawing of a configuration comprising two bodies.

### DETAILED DESCRIPTION OF EMBODIMENTS

The present invention will now be described with reference to the accompanying drawings, wherein the same or similar elements are identified with the same reference numeral.

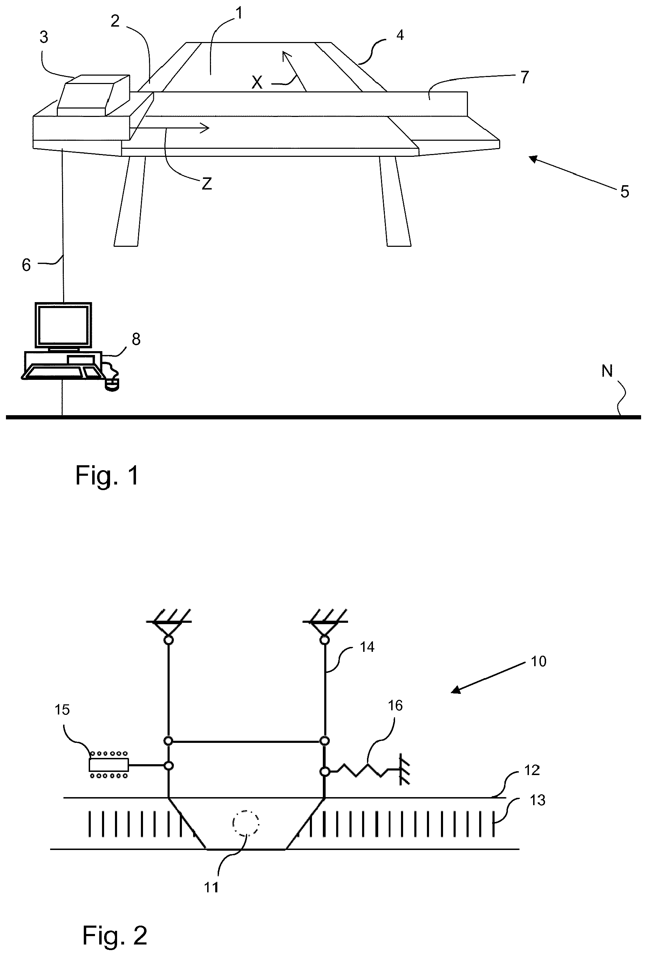

Fig. 1 is a print system 5 comprising a workstation 8 and a print engine 4. The workstation 8 may be a personal computer or another device for preparing image data in print jobs for prints to be printed by the print system. This workstation has access to a network N, either wired or wireless, for receiving print jobs comprising image data from other image preparation devices (not shown). The workstation 8 is configured as a print controller that schedules the different print jobs and converts the image data into print data. This conversion comprises a colour conversion from device independent colours to colours of the available colorants in the print engine 4. The available colorants are for example cyan (C), magenta (M), yellow (Y), black (K), white (W),varnish (V), light cyan (lc), light magenta (lm), green (G) and orange (O). These print data are communicated to the print engine by a dedicated communication interface 6. Inside the print engine 4, an engine controller (not shown) organizes the print data into print swaths and controls the print engine to apply the colorants according to the print data.

The print engine 4 comprises a flat bed surface 1 for supporting a flat receiving medium. The height of the flat bed surface is adjustable to accomodate the thickness of the receiving medium, thus keeping a predetermined distance between the surface of the receiving medium and the print heads in the print head carriage 3. The print head carriage 3 is capable of moving across the flat bed in two directions, indicated in Fig. 1 as Z and X direction. Z is the scanning direction wherein the carriage reciprocates along gantry 7 to print a swath of ink drops that constitute the printed image, X is the subscanning direction wherein gantry 7 makes a stepwise movement at the time the gantry is reversing its reciprocating movement in the scanning direction Z. The movement of the gantry is guided by guide rails 2 at both sides of the flatbed. The guide rail 2 also comprises a scale along which the position of the gantry is determined using a sensor that is connected to the gantry 7. The scale comprises discrete markers that are preferably sensed by an optical sensor.

Fig 2. shows a mechanical construction of a device 10 that is an embodiment of a position measurement device according the invention. An optical sensor 11 that reads the discrete markers 13 on scale 12 is used for determining a position of the sensor. Actuator 15, which is a voice coil in this embodiment, periodically moves the construction that is suspended to the gantry or to the print head carriage by connectors 14 and by a return spring 16. The oscillations of the sensor 11 have an amplitude as large as the distance between a couple of markers.

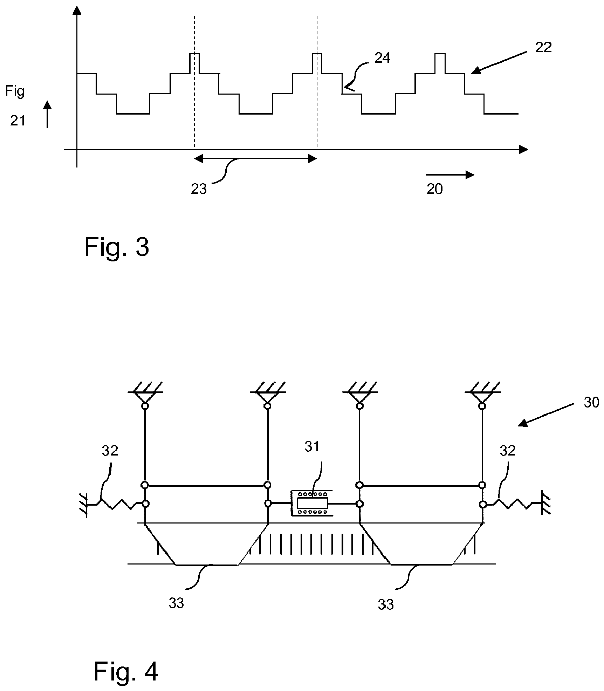

A signal 22 that is typically obtained from the sensor 11 when the device 10 is not transported along the scale, is depicted in Fig. 3. Along the horizontal axis 20 the time is indicated, whereas along the vertical axis 21 a count of the number of markers passed by the sensor 11 is displayed. The time range 23 indicates the period of the oscillation of the sensor. A step 24 in the count signal occurs at the time a marker is passed by the sensor. The position of the sensor is determined from an average of the count number over one or more of the cycle periods 23 with an accuracy that is better than the distance between the individual markers.

Fig. 4 shows an alternative embodiment of a device 30 according to the invention. In this embodiment two equally weighted housings 33 are mutually oscillated by an actuator 31 and attached to the print head or to the gantry by return springs 32. Either one or both of the bodies 33 comprise a sensor that registrates a passage of a marker 13 (Fig. 2) on the scale. This configuration has an advantage of inducing less vibrations in the system wherein it is employed.

An alternative embodiment of a high-bandwidth position measurement device (not shown) comprises a light emitter and two light sensitive sensors in a housing that is to be connected to a moving object. A scale with a regular series of openings for letting through light is connected to the stationary environment of the object and is placed in-between the emitter and the sensors. The openings act as markers. The device housing further comprises a receiver mask with two openings that oscillates in front of the sensors, driven by a piezo-electric element at a high frequency of several kiloHertz and an amplitude larger than the spacings of the openings in the scale. This oscillation is permitted by the low weight of the receiver mask and modulates the light received by the sensors for reading the scale and thus enables a signal interpretation for determining a position of the housing relative to the scale with an accuracy better than the distance between the openings in the scale.

The skilled person will recognise that other embodiments are possible within the scope of the appended claims.

## Claims

1. A position measurement device comprising a sensor and a scale, the scale comprising discrete markers that are sensed by the sensor for generating a signal indicating a position along the scale, **characterized in that** the device further comprises an actuator for periodically moving the scale and sensor relative to each other with an amplitude exceeding a distance between two markers and a computing unit for determining a position from the signal of the sensor during at least one period.

2. The device according to claim 1, wherein the actuator is a voice coil for moving a body comprising the sensor.

3. The device according to claim 1, wherein the actuator is connected to two bodies of equal weight, at least one body comprising the sensor.

4. The device according to claim 3, wherein both bodies comprise a sensor for reading the scale.

5. The device according to claim 1, wherein the sensor comprises a light emitting element and a light sensitive element.

6. The device according to claim 5, wherein the sensor comprises a mask that is movable between the light emitting element and the light sensitive element.

7. The device according to claim 5, wherein the sensor comprises between the light emitting element and the light sensitive element a clear sealed chamber with an opto-acoustically medium and a piezo pressure wave actuator for generating a standing wave in said medium.

8. The device according to claim 1, wherein the actuator is a piezo-electric element.

9. An inkjet printer wherein a print head is movable across a print surface, the printer comprising a position measurement device for determining a position of the print head according to claim 1.

10. A method for determining a position along a scale comprising discrete markers, using a sensor for generating a signal indicating a position along the scale by sensing the markers, **characterized in that** the sensor and the scale are periodically moved relative to each other by an actuator with an amplitude that exceeds a distance between two markers and the signal during at least one period is processed into a position that is more accurate than the distance between two markers.
